# EUROPEAN PATENT SPECIFICATION

(11) **EP 2 197 963 B1**
(45) Date of publication and mention of the grant of the patent: **27.05.2015**
(21) Application number: 08838301.3
(22) Date of filing: 18.09.2008
(51) Int. Cl.: C09D 11/02

(54) **CARBON BLACK PIGMENTED INK-JET INKS WHICH MAINTAIN NOZZLE HEALTH**
RUSSPIGMENTIERTE TINTENSTRAHLTINTEN MIT BEWAHRUNG EINES GESUNDEN DÜSENZUSTANDES
ENCRES POUR JET D'ENCRE PIGMENTÉES AVEC DU NOIR DE CARBONE QUI MAINTIENNENT LA DURÉE DE VIE DES BUSES

(30) Priority: 11.10.2007 US 974327
(43) Date of publication of application: 23.06.2010
(73) Proprietor: Hewlett-Packard Development Company, L.P., Houston, TX 77070 (US)
(72) Inventor: TYRELL, Paul, Corvallis Oregon 97330 (US)
(74) Representative: Beccarelli, Sandra Béatrice Yvonne
(86) International application number: PCT/US2008/076801
(87) International publication number: WO 2009/048721

(56) References cited:
- EP-A1- 1 262 529
- EP-A1- 1 944 343
- US-A1- 2005 120 914
- US-A1- 2005 206 703
- US-A1- 2007 043 146
- US-A1- 2007 068 419
- US-B2- 6 749 290

## Description

### BACKGROUND OF THE INVENTION

There are several reasons that ink-jet printing has become a popular way of recording images on various media surfaces, particularly paper. Some of these reasons include low printer noise, capability of high-speed recording, and multi-color recording. Additionally, these advantages can be obtained at a relatively low price to consumers. Though there has been great improvement in ink-jet printing, accompanying this improvement are increased demands by consumers in this area, e.g., higher speeds, higher resolution, full color image formation, increased stability, etc. As new ink-jet inks are developed, there have been several traditional characteristics to consider when evaluating the ink in conjunction with a printing surface or substrate. Such characteristics include edge acuity and optical density of the image on the surface, black to color bleed control, dry time of the ink on the substrate, adhesion to the substrate, lack of deviation in ink droplet placement, presence of all dots, resistance of the ink after drying to water and other solvents, long term storage stability, and long term reliability without corrosion or nozzle clogging. Though the above list of characteristics provides a worthy goal to achieve, there are difficulties associated with satisfying all of the above characteristics. Often, the inclusion of an ink component meant to satisfy one of the above characteristics can prevent another characteristic from being met. Thus, most commercial inks for use in ink-jet printers represent a compromise in an attempt to achieve at least an adequate response in meeting all of the above listed requirements.

One characteristic of ink-jet printing systems that is desirable to achieve is related to frequency response of the ink-jet ink, which is often proportional to ink throughput. With respect to this aspect, obtaining increased printing speed while retaining acceptable print quality and acceptable nozzle health is a constant challenge in the ink-jet printing industry. Accordingly, investigations continue into developing ink formulations that can be printed accurately at high frequencies without excessive clogging or maintenance.

### DETAILED DESCRIPTION OF THE PREFERRED EMBODIMENT(S)

Before particular embodiments of the present invention are disclosed and described, it is to be understood that this invention is not limited to the particular process and materials disclosed herein as such may vary to some degree. It is also to be understood that the terminology used herein is used for the purpose of describing particular embodiments only and is not intended to be limiting, as the scope of the present invention will be defined only by the appended claims and equivalents thereof.

In describing and claiming the present invention, the following terminology will be used.

The singular forms "a," "an," and "the" include plural referents unless the context clearly dictates otherwise. Thus, for example, reference to "a pigment" includes reference to one or more of such materials.

As used herein, "liquid vehicle" or "liquid medium" refers to liquid compositions that can be used to carry colorants, including pigments, to a substrate. Often, the fluid of the pigment suspension can be used as an ink-jet ink, or becomes incorporated with other solvents, surfactants, etc., to form an ink-jet ink. Many liquid vehicles and vehicle components are known in the art. Typical liquid vehicles can include a mixture of a variety of different agents, such as surfactants, co-solvents, buffers, biocides, sequestering agents, viscosity modifiers, and water. Additionally, the terms "aqueous liquid vehicle" or "aqueous vehicle" refer to liquid vehicles that contain water as a solvent. Such vehicles may also contain additional co-solvents, as is known in the art.

As used herein, "pigment" refers to a colorant particle which is typically substantially insoluble in the liquid vehicle in which it is used.

As used herein, "self-dispersed," "dispersant-functionalized" or a derivation thereof generally refers to pigments that have been functionalized with a dispersing agent, such as by chemical attachment of the dispersing agent to the surface of the pigment. The dispersing agent can be a small molecule or a polymer or oligomer. The dispersing agent can be attached to such pigments to terminate the outer shell of the pigment with a charge, thereby creating a repulsive nature that reduces agglomeration of pigment particles within the liquid vehicle.

As used herein, "DBP" refers to the amount of dibutyl phthalate absorption in cubic centimeters for 100 grams of the carbon pigment. As such, DBP values correlate to the structure of carbon black pigments, i.e. the more interstitial space between primary particles the greater the amount of DBP is absorbed.

As used herein, "carbon black pigment" or "base carbon" refers to pigments comprising carbon black, a form of amorphous carbon, prior to any surface modification, including dispersant-functionalization as defined herein. For example, when referring to a self-dispersed carbon black pigment having a base carbon DBP value, the DBP value refers to the carbon black pigment prior to the modification of the pigment with a dispersing agent.

As used herein, "frequency response" refers to the performance of ink-jet ink and ink-jet architecture used in combination with respect to ink-jet ink firing speed, i.e., dots fired per unit of time. Generally, a higher nozzle firing frequency tends to result in poorer print performance and can be accompanied by printhead clogging thereby requiring additional maintenance. As such, these conditions can misdirect ink drops and cause other undesirable characteristics. By current standards, firing frequencies above about 15 kHz are considered to be fast printing frequencies.

As used herein, "bleed" refers to the tendency of ink to run into and mix with adjacently printed inks. As used herein, "feathering" refers to the tendency of ink to spread undesirably into unprinted areas of the media substrate. Bleed and feathering typically occur prior to the printed inks fully drying on a substrate. The degree of bleed will depend on a variety of factors such as the drying speed of the ink, agglomeration of the colorant, and/or ink chemistry in general, among other variables.

As used herein, "edge acuity" refers to the crispness of a printed image along the border of the image.

As used herein, the term "about" is used to provide flexibility to a numerical range endpoint by providing that a given value may be "a little above" or "a little below" the endpoint. The degree of flexibility of this term can be dictated by the particular variable and would be within the knowledge of those skilled in the art to determine based on experience and the associated description herein.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a *de facto* equivalent of any other member of the same list solely based on their presentation in a common group without indications to the contrary.

Concentrations, amounts, and other numerical data may be expressed or presented herein in a range format. It is to be understood that such a range format is used merely for convenience and brevity and thus should be interpreted flexibly to include not only the numerical values explicitly recited as the limits of the range, but also to include all the individual numerical values or sub-ranges encompassed within that range as if each numerical value and sub-range is explicitly recited. As an illustration, a numerical range of "about 1 wt% to about 5 wt%" should be interpreted to include not only the explicitly recited values of about 1 wt% to about 5 wt%, but also include individual values and sub-ranges within the indicated range. Thus, included in this numerical range are individual values such as 2, 3.5, and 4 and sub-ranges such as from 1-3, from 2-4, and from 3-5, etc. This same principle applies to ranges reciting only one numerical value. Furthermore, such an interpretation should apply regardless of the breadth of the range or the characteristics being described.

It has been recognized that it would be advantageous to develop self-dispersed carbon black pigments and associated ink-jet inks capable of firing at frequencies of at least 18 kHz and which can maintain the nozzle health of ink-jet printing apparatuses. In accordance with this, the present invention is drawn to compositions, methods, and systems having self-dispersed carbon black pigment inks. It is noted that when discussing a self-dispersed carbon black pigment-containing composition or a system or method of printing images using such a composition, each of these discussions can be considered applicable to each of these embodiments, whether or not they are explicitly discussed in the context of that embodiment. Thus, for example, when discussing the DBP value of a carbon black pigment present in a ink, those DBP values can also describe carbon black pigments used in a method of printing or a system of printing, and *vice versa.*

In accordance with the present invention, a carbon black ink-jet ink composition can comprise a self-dispersed carbon black pigment having a base carbon DBP value of less than 60 and a liquid vehicle containing water and an organic solvent. The carbon black ink-jet ink can be formulated to maintain the nozzle health of an ink-jet printing apparatus when fired at a frequency of at least about 18 kHz.

Additionally, a method of rapidly printing a black ink-jet image can comprise ink-jetting a self-dispersed carbon black ink-jet ink onto a media substrate at a firing frequency of at least18 kHz. The carbon black ink-jet ink can comprise a liquid vehicle including water and an organic solvent, and from 0.5 wt% to 10 wt% of a self-dispersed carbon black carbon pigment having a base carbon DBP value of less than **60**, such that the self-dispersed carbon black ink-jet ink maintains the nozzle health of a ink-jet printing apparatus.

In another embodiment, a system for printing images on a substrate can comprise a carbon black ink-jet ink having a liquid vehicle including water and an organic solvent, and from 0.5 wt% to 10 wt% of a self-dispersed carbon black pigment having a base carbon DBP value of less than 60; and a printhead loaded with the carbon black ink-jet ink which is configured to jet the carbon black ink-jet ink at a firing frequency of at least about 18 kHz. The carbon black ink-jet ink can be formulated to maintain the nozzle health of the printhead.

Further advantages and embodiments of the present invention are described below.

### Self-dispersed carbon black pigment

The self-dispersed carbon black pigment can be a pigment functionalized with a dispersant. The dispersant is typically prepared in a precursor form, and then the precursor is attached to the pigment to chemically modify the surface of the pigment. In one embodiment, the dispersant can be attached to the carbon black using various precursor materials, such as para-aminobenzoic acids, isophthalic acids, triacids, carboxylic groups, sulfonylic groups, phosphates, oligomers, polymers, and isomers thereof, for example. Other precursors can also be used to attach to the carbon black, as would be known by those skilled in the art.

The carbon black pigment can be any commercially available carbon black pigment that provides acceptable optical density and print characteristics and has a DBP value of less than 60. Such carbon black pigments can be manufactured by a variety of known methods such as channel methods, contact methods, furnace methods, acetylene methods, or thermal methods, and are commercially available from such vendors as Cabot Corporation, Columbian Chemicals Company, Degussa AG, Mitsubishi, and E.I. DuPont de Nemours and Company. For example, commercially available carbon black pigments include Printex, including 95, 85, 75, 55, 45, 300, 35, 25, 200, 12, and Special Blacks including, 550, 350, 250, from Degussa; BP1100, BP900, BP800, M1100, M900, M800 from Cabot; Raven 2500ultra, 2000 from Columbian Chemicals Co; and 45 B from Mitsubishi. The carbon black structures listed herein include both bead and powder morphologies. In one embodiment, the DBP value can be less than 60. In another embodiment, the DBP value can be less than 40. In yet another embodiment, the DBP value can be less than 20.

Typically, the carbon black pigments of the present invention can be from about 5 nm to about 10 µm, and in one aspect, the pigments can be from 10 nm to about 500 nm in size, although sizes outside this range can be used if the pigment can remain dispersed and provide adequate printing properties. In one detailed aspect of the present invention, the functionalized carbon pigment comprises from about 0.5 wt% to about 10 wt% of the ink-jet ink composition.

The self-dispersed carbon black pigments described herein can maintain the nozzle health of an ink-jet printing apparatus as manifested by a reduction in the amount of maintenance needed, increased edge acuity, decreased feathering or bleeding, fewer misdirected ink drops, increased drop velocity, or by optimizing other ink-jet printing characteristics as is known in the art. In one embodiment, the self-dispersed carbon black ink-jet ink substantially maintains the nozzle health of an ink-jet printing apparatus when capped for a period of at least four weeks.

### Liquid vehicle

The ink-jet ink compositions of the present invention are typically prepared using an aqueous formulation or liquid vehicle which can include water, co-solvents, surfactants, buffering agents, biocides, sequestering agents, viscosity modifiers, humectants, binders, and/or other known additives. Typically the ink-jet ink compositions of the present invention have a viscosity of between about 0.8 cps to about 15 cps, and in one embodiment, can be from about 0.8 cps to about 8 cps. In one aspect of the present invention, the liquid vehicle can comprise from about 70 wt% to about 99.9 wt% of the ink-jet ink composition. The liquid vehicle typically comprises water and organic solvent. In one embodiment, the liquid vehicle can comprise water and about 1 wt% to about 70 wt% organic solvent. In another embodiment, the liquid vehicle can comprise water and about 5 wt% to about 50 wt% organic solvent.

Frequency response of the carbon black pigmented ink-jet inks can be proportional to the printer system throughput ability. In ink-jet printing systems, it can be desirous to have a high upper frequency limit while maintaining a functional frequency bandwidth within a lower range. In the prior art, a typical and understood solution to increasing pen system frequency range, and upper frequency limits particularly, has involved designing jetting architecture to accommodate the requirements of a given ink. However, it has been discovered that certain co-solvents can be used in liquid vehicles which increase the range of frequency response for a given ink-jet architecture and ink-jet ink combination. Specifically, alcohols, such as 2-ethyl-2-(hydroxymethyl)-1,3-propanediol (EHPD), can help provide a means of achieving superior frequency response in self-dispersed carbon black pigmented ink-jet inks. The improvement can be manifested by a reduction of misdirected ink drops upon ink-jet architecture firing, which improved nozzle directionality is particularly noted as the upper ink firing frequency limit is raised. Additionally, not only is better performance noted at these higher frequency levels, but the operational frequency bandwidth can also be expanded by the use of these co-solvents. For example, by increasing the upper frequency limit that can be used to jet a particular ink-jet ink, the effective range of frequency response of an ink can be increased. Thus, in one embodiment, a printhead can be configured to jet the carbon black ink-jet ink of the present invention at a firing frequency from 18 kHz to 25 kHz, or even from 20 kHz to 25 kHz, or higher. In another embodiment, a printhead can be configured to jet the carbon black ink-jet ink of the present invention at a firing frequency from at least about 18 kHz, or even from at least about 20 kHz. Though a high frequency range is provided, these same inks can also be jetted at from 3 kHz to 18 kHz as well, which is more common amongst many of the inks currently available on the market. Thus, the frequency response range of these ink-jet inks can be quite broad.

In addition to the presence of the alcohol co-solvents described above, other co-solvents can also be present. Suitable secondary co-solvents for use in the present invention include water soluble organic co-solvents, but are not limited to, aliphatic alcohols, aromatic alcohols, diols, triols, glycol ethers, poly(glycol) ethers, lactams, formamides, acetamides, long chain alcohols, ethylene glycol, propylene glycol, diethylene glycols, triethylene glycols, glycerine, dipropylene glycols, glycol butyl ethers, polyethylene glycols, polypropylene glycols, amides, ethers, carboxylic acids, esters, organosulfides, organosulfoxides, sulfones, alcohol derivatives, carbitol, butyl carbitol, cellosolve, ether derivatives, amino alcohols, and ketones. For example, co-solvents can include primary aliphatic alcohols of 30 carbons or less, primary aromatic alcohols of 30 carbons or less, secondary aliphatic alcohols of 30 carbons or less, secondary aromatic alcohols of 30 carbons or less, 1,2-diols of 30 carbons or less, 1,3-diols of 30 carbons or less, 1,5-diols of 30 carbons or less, ethylene glycol alkyl ethers, propylene glycol alkyl ethers, poly(ethylene glycol) alkyl ethers, higher homologs of poly(ethylene glycol) alkyl ethers, poly(propylene glycol) alkyl ethers, higher homologs of poly(propylene glycol) alkyl ethers, lactams, substituted formamides, unsubstituted formamides, substituted acetamides, and unsubstituted acetamides. Specific examples of co-solvents that are employed in the practice of this invention include, but are not limited to, 1,5-pentanediol, 2-pyrrolidone, ethoxylated glycerols such as Liponic ethylene glycol 1 (LEG-1) and Liponic ethylene glycol 7 (LEG-7), 2-methyl-2,4-pentanediol, 2-methyl-1,3-propanediol, 2-ethyl-2-hydroxymethyl-1,3-propanediol, diethylene glycol, 3-methoxybutanol, propylene glycol monobutyl ether, and 1,3-dimethyl-2-imidazolidinone. Co-solvents can be added to reduce the rate of evaporation of water in the ink to minimize clogging or other properties of the ink such as viscosity, pH, surface tension, optical density, and print quality. The co-solvent total concentration can range from about 1 wt% to about 70 wt%. In one embodiment, the co-solvent total concentration can be about 5 wt% to about 50 wt%. In another embodiment, the co-solvent total concentration can be about 20 wt% to about 50 wt%. In one embodiment, when multiple co-solvents are used, each co-solvent can be typically present at from about 0.5 wt% to about 15 wt% of the ink-jet ink composition.

Other additives, such as ammonium salts, can also be included, such as at from 0.1 wt% to 4 wt% in one embodiment. Examples of such ammonium salts include ammonium acetate, ammonium benzoate, ammonium nitrate, and ammonium sulfate. If used, the presence of an ammonium salt can improve edge acuity and reduce bleed of printed images. Though the ammonium salt can be configured to be stable within ink-jet architecture prior to firing, it is believed that the presence of an ammonium salt (which includes an NH₄⁺ group) can cause the ink as a whole to become destabilized on the print media after being jetted from the ink-jet architecture. By destabilized, the surface negative charges of the self-dispersed pigment particles can become agglomerated as the cation of the ammonium salt liberates a proton. In other words, the remaining NH₃ group can be liberated as a gas, and the positively charged proton is free to preferentially seek out the negative charge present around the pigment dispersion, thus, providing at least a degree of electrical neutralization.

Various buffering agents can also be optionally used in the ink-jet ink compositions of the present invention. Typical buffering agents include such pH control solutions as hydroxides of alkali metals and amines, such as lithium hydroxide, sodium hydroxide, potassium hydroxide; citric acid; amines such as triethanolamine, diethanolamine, and dimethylethanolamine; and other basic or acidic components. If used, buffering agents typically comprise less than about 10 wt% of the ink-jet ink composition.

In another aspect of the present invention, various biocides can be used to inhibit growth of undesirable microorganisms. Several non-limiting examples of suitable biocides include benzoate salts, sorbate salts, commercial products such as NUOSEPT (Nudex, Inc., a division of Huls America), UCARCIDE (Union Carbide), VANCIDE (RT Vanderbilt Co.), and PROXEL (ICI Americas) and other known biocides. Typically, such biocides comprise less than about 5 wt% of the ink-jet ink composition and often from about 0.05 wt% to about 2 wt%.

In an additional aspect of the present invention, binders can be included which act to secure the colorants on the substrate. Binders suitable for use in the present invention typically have a molecular weight of from about 100 to about 50,000 g/mol. Non-limiting examples include polyester, polyester-melanine, styrene-acrylic acid copolymers, styrene-acrylic acid-alkyl acrylate copolymers, styrene-maleic acid copolymers, styrene-maleic acid-alkyl acrylate copolymers, styrene-methacrylic acid copolymers, styrene-methacrylic acid-alkyl acrylate copolymers, styrene-maleic half ester copolymers, vinyl naphthalene-acrylic acid copolymers, vinyl naphthalene-maleic acid copolymers, and salts thereof. If the binder is in a particulate dispersed form, then it is not considered to be part of the liquid vehicle, but is considered to be carried by liquid vehicle.

In one aspect of the present invention, the ink-jet ink compositions are substantially free of surfactants. However, such components can be used and may include standard water-soluble surfactants such as alkyl polyethylene oxides, alkyl phenyl polyethylene oxides, polyethylene oxide (PEO) block copolymers, acetylenic PEO, PEO esters, PEO amines, PEO amides, and dimethicone copolyols. If used, surfactants can be present at from 0.001 wt% to 10 wt% of the ink-jet ink composition, and in one embodiment, can be present at from 0.001 wt% to 0.1 wt%.

### EXAMPLES

The following examples illustrate the embodiments of the invention that are presently best known. However, it is to be understood that the following are only exemplary or illustrative of the application of the principles of the present invention. Numerous modifications and alternative compositions, methods, and systems may be devised by those skilled in the art without departing from the spirit and scope of the present invention. The appended claims are intended to cover such modifications and arrangements. Thus, while the present invention has been described above with particularity, the following examples provide further detail in connection with what are presently deemed to be the most practical and preferred embodiments of the invention.

### Example 1

Carbon black pigmented ink-jet inks were prepared with pigments having DBP values of 43, 66, 105, and 115 within the ranges shown in Table 1.

**Table 1**

| **Component** | **Wt %** |
|---|---|
| Propylene glycol monobutyl ether | 0.5 - 5 |
| Ethoxylated Glycerol (LEG-1) | 0.5 - 15 |
| 2-pyrrolidinone | 0.5 - 15 |
| 2-ethyl-2-hydroxymethyl-1,3-propanediol (EHPD) | 0.5 - 15 |
| Surfactant | 0.001 - 10 |
| Self dispersed carbon black pigment | 0.1 - 10 |
| Water | balance |

### Example 2

The nozzle health of an ink-jet printing apparatus was measured using the carbon black inks of Example 1. Specifically, the carbon black inks were tested at a temperature of 30°C and with a relative humidity of 20% after a 4 week in-cap storage period. An ink-jet printing apparatus was used to print the inks on a paper substrate with corresponding data of nozzles per pen that failed to print. The data is presented as a percent of nozzles failing to print (% missing) at either the top and/or bottom of the paper. In other words, after a 4 week in-cap storage period, the ink-jet architecture was printed over an entire page (starting at the top and ending at the bottom). Thus, the top of the page represents initial printing after the 4 week in-cap storage period, and the bottom of the page represents printing after the nozzles had more of an opportunity to become unclogged. Eighty different pens were measured as shown in Table 2.

**Table 2**

| | **Carbon Black Inks from Example 1** | | | | | | | |
|---|---|---|---|---|---|---|---|---|
| | DBP 43 | | DBP 66 | | DBP 105 | | DBP 115 | |
| Pen Set # | % Missing Top | % Missing Bottom | % Missing Top | % Missing Bottom | % Missing Top | % Missing Bottom | % Missing Top | % Missing Bottom |
| 1 | 0 | 0 | 0 | 0 | 100 | 85 | 100 | 100 |
| 2 | 4 | 0 | 0 | 0 | 45 | 0 | 100 | 100 |
| 3 | 0 | 0 | 0 | 0 | 9 | 0 | 100 | 95 |
| 4 | 0 | 0 | 0 | 0 | 2 | 0 | 100 | 100 |
| 5 | 0 | 0 | 0 | 0 | 1 | 0 | 100 | 100 |
| 6 | 0 | 0 | 0 | 0 | 45 | 2 | 100 | 80 |
| 7 | 0 | 0 | 0 | 0 | 20 | 0 | 100 | 95 |
| 8 | 0 | 0 | 1 | 0 | 27 | 0 | 100 | 82 |
| 9 | 0 | 0 | 8 | 0 | 9 | 0 | 100 | 100 |
| 10 | 2 | 0 | 0 | 0 | 15 | 0 | 100 | 100 |
| 11 | 0 | 0 | 1 | 0 | 41 | 0 | 100 | 100 |
| 12 | 2 | 0 | 1 | 0 | 17 | 0 | 100 | 100 |
| 13 | 9 | 0 | 0 | 0 | 89 | 0 | 100 | 100 |
| 14 | 0 | 0 | 0 | 0 | 29 | 0 | 100 | 100 |
| 15 | 0 | 0 | 0 | 0 | 19 | 0 | 100 | 100 |
| 16 | 0 | 0 | 0 | 0 | 0 | 0 | 100 | 14 |
| 17 | 3 | 0 | 0 | 0 | 7 | 0 | 100 | 75 |
| 18 | 0 | 0 | 0 | 0 | 10 | 0 | 100 | 20 |
| 19 | 6 | 0 | 0 | 0 | 15 | 0 | 100 | 100 |
| 20 | 1 | 0 | 0 | 0 | 11 | 0 | 100 | 100 |
| **AVG** | **1** | **0** | **1** | **0** | **26** | **4** | **100** | **88** |

Table 2 shows the percent of nozzles that missed at the top of a page and/or the bottom of the page. The experiment was iterated 20 times with different pens in order to provide a clear showing of the advantages provided by the present invention. An average is shown at the bottom of Table 2. As illustrated by Table 2, the higher the DBP value, the greater the percent of missing nozzles during printing. For example, the carbon black ink having a DBP value of 115, missed at the top of the page 100% of the time and missed at the bottom of the page on an average of 88% of the time, whereas the carbon black ink having a DBP value of 43 had an average of 1% missing at the top of the page and 0% missing at the bottom of the page. As such, Table 2 clearly shows that the lower DBP carbon black pigments maintain the nozzle health of the pens.

While the invention has been described with reference to certain preferred embodiments, those skilled in the art will appreciate that various modifications, changes, omissions, and substitutions can be made without departing from the spirit of the invention. It is therefore intended that the invention be limited only by the scope of the appended claims.

## Claims

1. A carbon black Ink-jet ink, comprising from 0.5 wt % to 10 wt % of a self-dispersed carbon black pigment, having a base carbon DBP value of less than 60 and a liquid vehicle containing water and an organic solvent.

2. The ink of claim 1 , wherein the self-dispersed carbon black pigment is functionalized with an acid selected from the group of para-aminobenzoic adds, isophthalic acids, triacids, carboxylic groups, pulfonylic groups, phosphates, oligomers, polymers, and combinations thereof.

3. The ink of claim 1, wherein the organic solvent includes 2-ethyl-2-hydroxymethyl-1,3-propanediol.

4. The ink of claim 3, wherein, in addition to the 2-ethyl-2-hydroxymethyl-1,3-propanediol, the organic solvent includes at least three other organic co-solvents, each being present at from about 0.5 wt% to about 15 wt%.

5. The ink of claim 4, wherein the three other organic solvents include at least two of propylene glycol monobutyl ether, an ethoxylated glycerol, and 2-pyrrolidione.

6. A method of rapidly printing a black ink-jet image, comprising ink-jetting a self-dispersed carbon black ink-jet ink onto a media substrate at a firing frequency of at least 18 kHz, said carbon black ink-jet ink comprising:
a) a liquid vehicle includinng water and organic solvent, and
b) from 0.5 wt% to 10 wt% of a self-dispersed carbon black carbon pigment having a base carbon DBP value of less than 60,
such that the self-dispersed carbon black ink-jet ink substantially maintains the nozzle health of an ink-jet printing apparatus.

7. The method of claim 6, wherein the self-dispersed carbon black ink-jet ink substantially maintains the nozzle health of an ink-jet printing apparatus when capped for a period of at least four weeks.

8. A system for printing images on a substrate, comprising:
a) a carbon black ink-jet ink including:
i) a liquid vehicle including water and organic solvent, and
ii) from 0.5 wt% to 10 wt% of a self-dispersed carbon black pigment having a base carbon DBP value of less than 60; and
b) a printhead loaded with the carbon black ink-jet ink which is configured to jet the carbon black ink-jet ink at a firing frequency of at least about 18 kHz,
such that the carbon black ink-jet ink maintains the nozzle health of the printhead.

## Patentansprüche

1. Tintenstrahl-Rußtinte, umfassend 0,5 Gew.-% bis 10 Gew.-% eines selbst-dispergierten Rußpigments mit einem DBP-Basiswert von Ruß von weniger als 60 und einen flüssigen Träger, der Wasser und ein organisches Lösungsmittel enthält.

2. Tinte nach Anspruch 1, wobei das selbst-dispergierte Rußpigment mit einer Säure funktionalisiert ist, die ausgewählt ist aus der Gruppe von para-Aminobenzoesäuren, Isophthalsäuren, dreiwertigen Säuren, Carboxylgruppen, Sulfonylgruppen, Phosphaten, Oligomeren, Polymeren und Kombinationen davon.

3. Tinte nach Anspruch 1, wobei das organische Lösungsmittel 2-Ethyl-2-hydroxymethyl-1,3-propandiol umfasst.

4. Tinte nach Anspruch 3, wobei das organische Lösungsmittel zusätzlich zu dem 2-Ethyl-2-hydroxymethyl-1,3-propandiol mindestens drei weitere organische Hilfslösungsmittel umfasst, wobei jedes in einer Menge von etwa 0,5 Gew.-% bis etwa 15 Gew.-% vorliegt.

5. Tinte nach Anspruch 4, wobei die drei weiteren organischen Lösungsmittel mindestens zwei von Propylenglycolmonobutylether, einem ethoxylierten Glycerol und 2-Pyrrolidion umfassen.

6. Verfahren zum schnellen Drucken eines schwarzen Tintendruckbildes, umfassend das Tintenstrahlen einer selbst-dispergierten Tintenstrahl-Rußtinte auf ein Mediensubstrat mit einer Strahlfrequenz von mindestens 18 kHz, wobei die Tintenstrahl-Rußtinte Folgendes umfasst:
a) einen flüssigen Träger, der Wasser und organisches Lösungsmittel umfasst, und
b) 0,5 Gew.-% bis 10 Gew.-% eines selbst-dispergierten Rußpigments mit einem DBP-Basiswert von Ruß von weniger als 60,
so dass die selbst-dispergierte Tintenstrahl-Rußtinte im Wesentlichen die Unversehrtheit der Düsen eines Tintenstrahldruckers erhält.

7. Verfahren nach Anspruch 6, wobei die selbst-dispergierte Tintenstrahl-Rußtinte im Wesentlichen die Unversehrtheit der Düsen eines Tintenstrahldruckers erhält, wenn sie über einen Zeitraum von mindestens vier Wochen abgedeckt ist.

8. System zum Drucken von Bildern auf ein Substrat, umfassend:
a) eine Tintenstrahl-Rußtinte, umfassend:
i) einen flüssigen Träger, der Wasser und organisches Lösungsmittel umfasst, und
ii) 0,5 Gew.-% bis 10 Gew.-% eines selbst-dispergierten Rußpigments mit einem DBP-Basiswert von Ruß von weniger als 60; und
b) einen Druckkopf, der mit der Tintenstrahl-Rußtinte beladen und dafür ausgelegt ist, die Tintenstrahl-Rußtinte mit einer Strahlfrequenz von mindestens etwa 18 kHz auszustoßen,
so dass die Tintenstrahl-Rußtinte die Unversehrtheit der Düsen des Druckkopfes erhält.

## Revendications

1. Encre pour jet d'encre au noir de carbone, comprenant de 0,5 % en poids à 10 % en poids d'un pigment noir de carbone auto-dispersé, ayant une valeur en dibutyl phtalate (DBP) du carbone de base inférieure à 60 et un véhicule liquide contenant de l'eau et un solvant organique.

2. L'encre de la revendication 1, où le pigment noir de carbone auto-dispersé est fonctionnalisé avec un acide choisi dans le groupe des acides para-aminobenzoïques, des acides isophtaliques, des triacides, des groupes carboxyliques, des groupes sulfonyliques, des phosphates, des oligomères, des polymères, et de combinaisons de ceux-ci.

3. L'encre de la revendication 1, où le solvant organique inclut du 2-éthyl-2-hydroxyméthyl-1,3-propanediol.

4. L'encre de la revendication 3 où, en plus du 2-éthyl-2-hydroxyméthyl-1,3-propanediol, le solvant organique inclut au moins trois autres co-solvants organiques, chacun étant présent à hauteur d'environ 0,5 % en poids à environ 15 % en poids.

5. L'encre de la revendication 4, où les trois autres co-solvants organiques incluent au moins deux parmi le propylène glycol monobutyl éther, un glycérol éthoxylé et la 2-pyrrolidone.

6. Méthode d'impression rapide d'une image par jet d'encre noir, comprenant de projeter une encre pour jet d'encre au noir de carbone auto-dispersé sur un médium de substrat à une fréquence de tir d'au moins 18 kHz, ladite encre pour jet d'encre au noir de carbone comprenant :
a) un véhicule liquide contenant de l'eau et un solvant organique, et
b)de 0,5 % en poids à 10 % en poids d'un pigment noir de carbone auto-dispersé ayant une valeur en DBP du carbone de base inférieure à 60,
tel que l'encre pour jet d'encre au noir de carbone prolonge substantiellement la durée de vie des buses d'une imprimante à jet d'encre.

7. La méthode de la revendication 6, où l'encre pour jet d'encre au noir de carbone auto-dispersé prolonge substantiellement la durée de vie des buses d'une imprimante à jet d'encre quand son bouchon est maintenu en place pour une période d'au moins quatre semaines.

8. Système d'impression d'images sur un substrat, comprenant :
a) une encre pour jet d'encre au noir de carbone incluant :
i) un véhicule liquide contenant de l'eau et un solvant organique, et
ii) de 0,5 % en poids à 10 % en poids d'un pigment noir de carbone auto-dispersé ayant une valeur en DBP du carbone de base inférieure à 60 ; et
b)une tête d'impression chargée avec l'encre pour jet d'encre au noir de carbone qui est configurée pour projeter l'encre pour jet d'encre au noir de carbone à une fréquence de tir d'au moins environ 18 kHz,
tel que l'encre pour jet d'encre au noir de carbone prolonge la durée de vie des buses de la tête d'impression.
